# EUROPEAN PATENT SPECIFICATION

(11) **EP 3 798 994 B1**
(45) Date of publication and mention of the grant of the patent: **29.10.2025**
(21) Application number: 20196310.5
(22) Date of filing: 15.09.2020
(51) Int. Cl.: G05B 19/042, H04B 7/185, B64F 5/60, G06F 8/60, H04L 12/40, H04W 84/06

(54) **DEVICES, SYSTEMS, AND METHODS FOR ROUTING DATA TO DISTRIBUTED DEVICES IN AIRCRAFT**
VORRICHTUNGEN, SYSTEME UND VERFAHREN ZUM ROUTEN VON DATEN ZU VERTEILTEN VORRICHTUNGEN IN FLUGZEUGEN
DISPOSITIFS, SYSTÈMES ET PROCÉDÉS DE ROUTAGE DE DONNÉES VERS DES DISPOSITIFS DISTRIBUÉS DANS UN AÉRONEF

(30) Priority: 26.09.2019 US 201962906290 P
(43) Date of publication of application: 31.03.2021
(73) Proprietor: General Electric Company, Evendale, OH 45215 (US)
(72) Inventor: GILTON, Jeffrey, Schenectady, New York 12345 (US); CLARK, Brian, Schenectady, New York 12345 (US); GANAPATHY, Vasanth, Schenectady, New York 12345 (US); PFENNINGER, Matthew, Schenectady, New York 12345 (US); NICHOLS, Douglas, Schenectady, New York 12345 (US)
(74) Representative: Openshaw & Co.

(56) References cited:
- EP-A1- 2 859 419
- EP-A1- 2 859 422
- US-A- 5 805 828
- US-A1- 2018 006 708
- US-B2- 9 367 970

## Description

### FIELD

The present disclosure relates to devices, systems, and methods for routing data to distributed devices, and more specifically, to devices, systems, and methods for routing data from ground support equipment to one or more distributed control modules via a combination of an Ethernet connection and an engine control bus.

### BACKGROUND

Aircraft components, particularly aircraft engines, may incorporate a plurality of sensors that sense various conditions relating to the aircraft components, which are used by software to detect, diagnose, or predict issues and/or faults in real time, even as the aircraft is being operated (e.g., flying). Such software is frequently updated as more information regarding operation of aircraft components is obtained such that the software becomes more accurate in diagnosing or predicting issues and/or faults with each successive update.

Currently, software updates cannot be pushed to the aircraft (or components thereof) or computer systems communicatively coupled to the aircraft automatically. Rather, software is provided by a manufacturer on a physical medium and is only installed by an operator or a service center upon receiving a corresponding service bulletin and testing the software. As such, the aircraft (or components thereof) does not always have the most up-to-date software installed. In order to update software for multiple devices or multiple processing systems in an aircraft, each of the multiple devices or the multiple processing systems requires a dedicated Ethernet connection to communicate with an external device that provides software updates.

Accordingly, a need exists for a data routing system that allows software updates for multiple distributed devices in the aircraft with a single Ethernet connection with an external data loader by routing data to the distributed devices via data busses. US2018/006708 Al discloses systems and methods for recording and communicating engine data. EP2859419 Al discloses a wireless engine monitoring system and configurable wireless engine sensors. US9367970 B2 discloses a wireless engine monitoring system. EP2859422 Al discloses a wireless engine monitoring system and associated engine wireless sensor network. US5805828 A discloses a method and apparatus for an avionics system utilizing both ARINC 429 and ARINC 629 compliant systems.

### SUMMARY

The present invention is defined in the appended independent claims to which reference should be made. Advantageous features are set out in the appended dependent claims.

In an embodiment, a data routing system includes an aircraft and an equipment communicatively coupled to a control unit. The aircraft includes a control unit, and one or more distributed modules. The control unit is configured to communicate with each of the one or more distributed modules via an engine control bus. The control unit is configured to receive an Ethernet packet from the equipment via an Ethernet connection, translate protocols of the Ethernet packet to protocols for the engine control bus, identify an IP address in the Ethernet packet, and route data of the Ethernet packet to one of the one or more distributed modules over the engine control bus based on the IP address and the translated protocols.

In an embodiment, a control unit for an aircraft includes one or more processors; one or more databases; and one or more non-transitory memory modules communicatively coupled to the one or more processors and storing machine-readable instructions that, when executed, cause the one or more processors to receive an Ethernet packet from an equipment external to the aircraft via an Ethernet connection; translate protocols of the Ethernet packet to protocols for an engine control bus, the engine control bus being established between the control unit and one or more distributed modules; extract an IP address from the data; and route the data to one of the one or more distributed modules over the engine control bus based on the IP address and the translated protocols.

In an embodiment, a method for routing data for an aircraft including a control unit and one or more distributed modules includes receiving data from an equipment external to the aircraft via an Ethernet connection, translating Ethernet protocols of the data to protocols for an engine control bus, the engine control bus being established between the control unit and one or more distributed modules, extracting an IP address from the data received from the equipment, and routing the data to one of the one or more distributed modules over the engine control bus based on the IP address and the translated protocols .

These and other features, and characteristics of the present technology, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of 'a', 'an', and 'the' include plural referents unless the context clearly dictates otherwise.

### BRIEF DESCRIPTION OF THE DRAWINGS

FIG. 1 schematically depicts an illustrative data routing system according to one or more embodiments shown and described herein;
FIG. 2 depicts functional block diagrams including an engine control system and a ground support equipment, according to one or more embodiments shown and described herein;
FIG. 3 depicts communication among a ground support equipment, a control unit, a first distributed module, and a second distributed module, according to one or more embodiments shown and described herein;
FIG. 4 depicts communication among a ground support equipment, a control unit, a first distributed module, and a second distributed module, according to another embodiment shown and described herein; and
FIG. 5 depicts communication among a ground support equipment, a control unit, a first distributed module, and a second distributed module, according to another embodiment shown and described herein.

### DETAILED DESCRIPTION

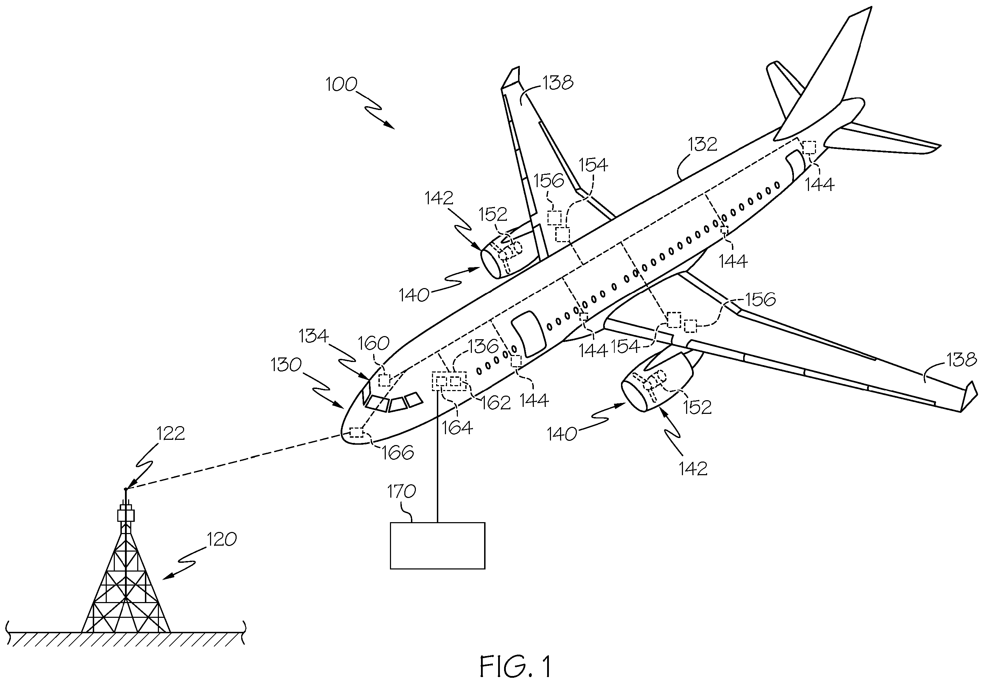

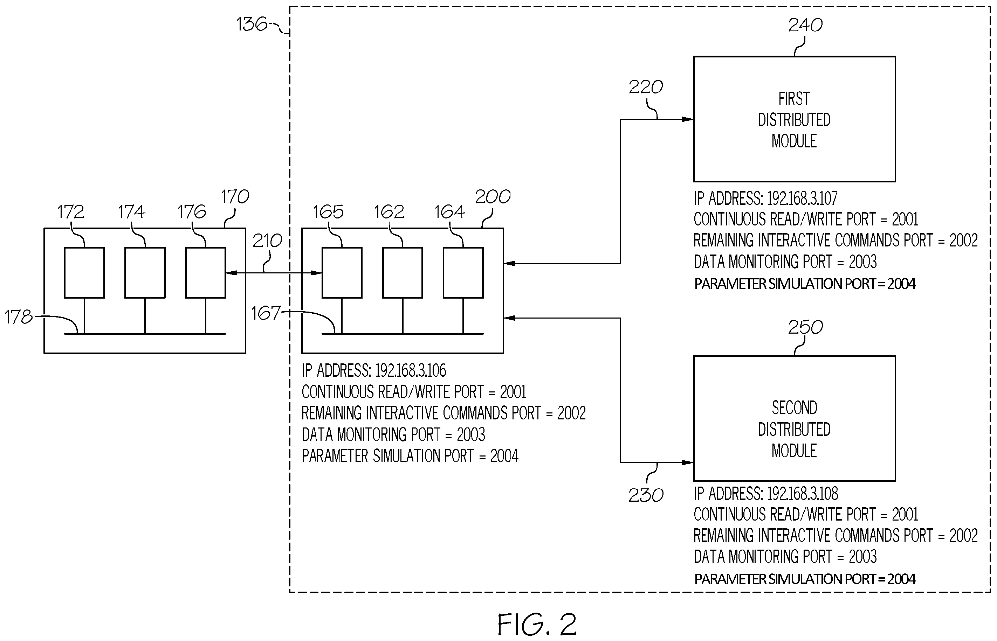

The present disclosure generally relates to devices, systems, and methods that route data to distributed devices for providing software and/or software updates to aircraft and/or components thereof. By referring to FIGS. 1 and 2, a single device, i.e., a control unit 200 communicates with a ground support equipment (GSE) 170 via an Ethernet connection. The control unit 200 communicates with distributed modules such as a first distributed module 240 or a second distributed module 250 through a first engine control bus 220 or a second engine control bus 230 to operate in a peer-to-peer configuration. The first engine control bus 220 and the second engine control bus 230 are existing engine data busses in the aircraft that are used to communicate between distributed control components on engines. The control unit 200 includes routing software that translates protocols from Ethernet to the protocols for the first engine control bus 220 and the second engine control bus 230.

Conventionally, engine systems having multiple devices or single devices with internal multiple processing systems require dedicated Ethernet wiring to each of the devices with an external switch to allow multiple devices to communicate with a ground support equipment over a single network. For example, some engines have an electronic engine control (EEC) and an engine monitoring unit (EMU). Each of the EEC and the EMU has an Ethernet connection and can be reprogrammed with a data loader such as a portable maintenance access terminal (PMAT) and monitored separately. As another example, some engines have an EEC with an internal Vibration And Health Monitoring (VAHM) processor. The main processor and VAHM processor have separate Ethernet connections. Each processor can be reprogrammed separately by connecting the PMAT to the corresponding Ethernet connection. Only the main processor can be monitored. In all these cases, off engine reprogramming and data monitoring require separate connections to each of the devices.

According to the present disclosure, only the control unit 200 has an Ethernet connection, and the distributed module 240 and the second distributed module 250 do not have an Ethernet connection. In embodiments, a single device on the engines 140, i.e., the control unit 200 directly communicates with the GSE 170. The control unit 200 operates similar to an Ethernet switch that routes messages to distributed modules. For example, the control unit 200 recognizes traffic destined for the distributed module 240 or the second distributed module 250 based on an IP address included in the message received from the GSE 170 and routes the message to the correct device over the first engine control bus 220 or the second engine control bus 230. In this regard, the present disclosure enables traffic separation for the control unit 200 and the distributed module 240 or the second distributed module 250 using the same ports (e.g., the continuous read/write port, the remaining interactive commands port, the data monitoring port, and the parameter simulation port). Even though the distributed module 240 and the second distributed module 250 do not have an Ethernet connection, reprogramming and data upload/download for the control unit 200 and the distributed module 240 or 250 can be implemented according to the same standards (e.g., ARINC 615A and ARINC 675) because the routing software of the control unit 200 translates protocols from one format (e.g., Ethernet protocols) to another (e.g., protocols for an engine control bus) such that data can be transmitted over both an Ethernet connection and an engine control bus. Thus, the present disclosure enables data monitoring of the control unit 200 and the distributed module 240 or 250 by the GSE 170 using the same protocol.

FIG. 1 depicts an illustrative software delivery system, generally designated 100, that is used to distribute software to aircraft 130 according to various embodiments. As shown in FIG. 1, the software delivery system 100 generally contains an interconnectivity of components coupled via a network, which may include a wide area network, such as the internet, a local area network (LAN), a mobile communications network, a public service telephone network (PSTN) and/or other network and may be configured to electronically connect components. The illustrative components that may be connected via the network include, but are not limited to, a ground system 120 in communication with the aircraft 130 (e.g., via a ground wireless communications link 122 and an aircraft wireless communications link 166), and a ground support equipment 170.

The aircraft 130 generally includes a fuselage 132, wing assemblies 138, and one or more engines 140. While FIG. 1 depicts the aircraft 130 as being a fixed-wing craft having two wing assemblies 138 with one engine 140 mounted on each wing assembly 138 (two engines 140 total), other configurations are contemplated. For example, other configurations may include more than two wing assemblies 138, more than two engines 140 (e.g., trijets, quadjets, etc.), engines 140 that are not mounted to a wing assembly 138 (e.g., mounted to the fuselage, mounted to the tail, mounted to the nose, etc.), non-fixed wings (e.g., rotary wing aircraft), and/or the like.

As illustrated in FIG. 1, the aircraft 130 may include the engines 140 coupled to the wing assemblies 138 and/or the fuselage 132, a cockpit 134 positioned in the fuselage 132, and the wing assemblies 138 extending outward from the fuselage 132. A control mechanism 160 for controlling the aircraft 130 is included in the cockpit 134 and may be operated by a pilot located therein. It should be understood that the term "control mechanism" as used herein is a general term used to encompass all aircraft control components, particularly those typically found in the cockpit 134.

A plurality of additional aircraft systems 144 that enable proper operation of the aircraft 130 may also be included in the aircraft 130 as well as an engine control system 136, and a communication system having the aircraft wireless communications link 166. The additional aircraft systems 144 may generally be any systems that effect control of one or more components of the aircraft 130, such as, for example, cabin pressure controls, elevator controls, rudder controls, flap controls, spoiler controls, landing gear controls, heat exchanger controls, and/or the like. In some embodiments, the avionics of the aircraft 130 may be encompassed by one or more of the additional aircraft systems 144. The aircraft wireless communications link 166 may generally be any air-to-ground communication system now known or later developed. Illustrative examples of the aircraft wireless communications link 166 include, but are not limited to, a transponder, a very high frequency (VHF) communication system, an aircraft communications addressing and reporting system (ACARS), a controller-pilot data link communications (CPDLC) system, a future air navigation system (FANS), and/or the like. The engine control system 136 may be operably coupled to the plurality of aircraft systems 144 and/or the engines 140. While the embodiment depicted in FIG. 1 specifically refers to the engine control system 136, it should be understood that other controllers may also be included within the aircraft 130 to control various other aircraft systems 144 that do not specifically relate to the engines 140.

The engine control system 136 generally includes one or more components for controlling each of the engines 140, such as, for example, a diagnostic computer, an engine-related digital electronic unit that is mounted on one or more of the engines 140 or the aircraft 130, and/or the like. The engine control system 136 may also be referred to as a digital engine control system. Illustrative other components within the engine control system that may function with the engine control system 136 and may require software to operate include, but are not limited to, an electronic engine control (EEC), an electronic engine control unit (EECU), a distributed control module (DCM), a digital engine control (DEC), an engine monitoring unit (EMU), and an engine monitoring system (EMSC). The software used by any one of these components may be software that is distributed as described herein

The engine control system 136 may also be connected with other controllers of the aircraft 130. In embodiments, the engine control system 136 may include a processor 162 and/or a non-transitory memory component 164, including non-transitory memory. In some embodiments, the non-transitory memory component 164 may include random access memory (RAM), read-only memory (ROM), flash memory, or one or more different types of portable electronic memory, such as discs, digital versatile discs (DVDs), CD-ROMs, or the like, or any suitable combination of these types of memory. The processor 162 may carry out one or more programming instructions stored on the non-transitory memory component 164, thereby causing operation of the engine control system 136. That is, the processor 162 and the non-transitory memory component 164 within the engine control system 136 may be operable to carry out the various processes described herein with respect to the engine control system 136, including operating various components of the aircraft 130 (such as the engine 140 and/or components thereof), monitoring the health of various components of the aircraft 130 (e.g., the engine 140 and/or components thereof), monitoring operation of the aircraft 130 and/or components thereof, installing software, installing software updates, modifying a record in a distributed ledger to indicate that software has been installed, and/or updated, carrying out processes according to installed and/or updated software, and/or the like.

In some embodiments, the engine control system 136 may include a full authority digital engine control (FADEC) system. Such a FADEC system can include various electronic components, one or more sensors, and/or one or more actuators that control each of the engines 140. In particular embodiments, the FADEC system includes an electronic engine control system (EEC) or engine control unit (ECU), as well as one or more additional components that are configured to control various aspects of performance of the engines 140. The FADEC system generally has full authority over operating parameters of the engines 140 and cannot be manually overridden. A FADEC system generally functions by receiving a plurality of input variables of a current flight condition, including, but not limited to, air density, throttle lever position, engine temperature, engine pressure, and/or the like. The inputs are received, analyzed, and used to determine operating parameters such as, but not limited to, fuel flow, stator vane position, bleed valve position, and/or the like. The FADEC system may also control a start or a restart of the engines 140. The operating parameters of the FADEC can be modified by installing and/or updating software, such as the software that is distributed by the software delivery system 100 described herein. As such, the FADEC can be programmatically controlled to determine engine limitations, receive engine health reports, receive engine maintenance reports and/or the like to undertake certain measures and/or actions in certain conditions.

In some embodiments, the engine control system 136 may include a Prognostics and Health Monitoring (PHM) system. Such a PHM system can include various electronic components, one or more sensors, and/or one or more actuators that monitor one or more engine systems in the aircraft 130. In some embodiments, the PHM system may be used to predict a future performance of a component by assessing an extent of deviation and/or degradation of a system from its expected normal operating conditions. This may be completed by analyzing failure modes, detecting early signs of wear and aging, and detecting fault conditions. Such actions may be data driven, and may be improved by utilizing machine learning or the like to more accurately predict conditions and determine potential faults. As such, software that is implemented by the PHM system may be continuously updated via the systems and methods described herein to cause the PHM system to more accurately sense and predict component performance.

In some embodiments, the engine control system 136 may include one or more programming instructions for diagnosing and/or predicting one or more engine system faults in the aircraft 130. Diagnosed and/or predicted faults may include, but are not limited to, improper operation of components, failure of components, indicators of future failure of components, and/or the like. As used herein, the term diagnosing refers to a determination after the fault has occurred and contrasts with prediction, which refers to a forward-looking determination that makes the fault known in advance of when the fault occurs. Along with diagnosing, the engine control system 136 may detect the fault.

The software run by the engine control system 136 (e.g., executed by the processor 162 and stored within the non-transitory memory component 164) may include a computer program product that includes machine-readable media for carrying or having machine-executable instructions or data structures. Such machine-readable media may be any available media, which can be accessed by a general purpose or special purpose computer or other machine with a processor. Generally, such a computer program may include routines, programs, objects, components, data structures, algorithms, and/or the like that have the technical effect of performing particular tasks or implementing particular abstract data types. Machine-executable instructions, associated data structures, and programs represent examples of program code for executing the exchange of information as disclosed herein. Machine-executable instructions may include, for example, instructions and data, which cause a general purpose computer, special purpose computer, or special purpose processing machine to perform a certain function or group of functions. In some embodiments, the computer program product may be provided by a component external to the engine control system 136 and installed for use by the engine control system 136. For example, the computer program product may be provided by the ground support equipment 170, as described in greater detail herein. The computer program product may generally be updatable via a software update that is received from one or more components of the software delivery system 100, such as, for example, the ground support equipment 170, as described in greater detail herein. The software is generally updated by the engine control system 136 by installing the update such that the update supplements and/or overwrites one or more portions of the existing program code for the computer program product. The software update may allow the computer program product to more accurately diagnose and/or predict faults, provide additional functionality not originally offered, and/or the like.

In embodiments, each of the engines 140 may include a fan 142 and one or more sensors for sensing various characteristics of the fan 142 during operation of the engines 140. Illustrative examples of the one or more sensors include, but are not limited to, a fan speed sensor 152, a temperature sensor 154, and a pressure sensor 156. The fan speed sensor 152 is generally a sensor that measures a rotational speed of the fan 142 within the engine 140. The temperature sensor 154 may be a sensor that measures a fluid temperature within the engine 140 (e.g., an engine air temperature), a temperature of fluid (e.g., air) at an engine intake location, a temperature of fluid (e.g., air) within a compressor, a temperature of fluid (e.g., air) within a turbine, a temperature of fluid (e.g., air) within a combustion chamber, a temperature of fluid (e.g., air) at an engine exhaust location, a temperature of cooling fluids and/or heating fluids used in heat exchangers in or around an engine, and/or the like. The pressure sensor 156 may be a sensor that measures a fluid pressure (e.g., air pressure) in various locations in and/or around the engine 140, such as, for example, a fluid pressure (e.g., air pressure) at an engine intake, a fluid pressure (e.g., air pressure) within a compressor, a fluid pressure (e.g., air pressure) within a turbine, a fluid pressure (e.g., air pressure) within a combustion chamber, a fluid pressure (e.g., air pressure) at an engine exhaust location, and/or the like.

In some embodiments, each of the engines 140 may have a plurality of sensors associated therewith (including one or more fan speed sensors 152, one or more temperature sensors 154, and/or one or more pressure sensors 156). That is, more than one of the same type of sensor may be used to sense characteristics of an engine 140 (e.g., a sensor for each of the different areas of the same engine 140). In some embodiments, one or more of the sensors may be utilized to sense characteristics of more than one of the engines 140 (e.g., a single sensor may be used to sense characteristics of two engines 140). The engines 140 may further include additional components not specifically described herein, and may include one or more additional sensors incorporated with or configured to sense such additional components in some embodiments.

In embodiments, each of the sensors (including, but not limited to, the fan speed sensors 152, the temperature sensors 154, and the pressure sensors 156) may be communicatively coupled to one or more components of the aircraft 130 such that signals and/or data pertaining to one or more sensed characteristics are transmitted from the sensors for the purposes of determining, detecting, and/or predicting a fault, as well as completing one or more other actions in accordance with software that requires sensor information. As indicated by the dashed lines extending between the various sensors (e.g., the fan speed sensors 152, the temperature sensors 154, and the pressure sensors 156) and the aircraft systems 144 and the engine control system 136 in the embodiment depicted in FIG. 1, the various sensors may be communicatively coupled to the aircraft systems 144 and/or the engine control system 136 in some embodiments. As such, the various sensors may be communicatively coupled via wires or wirelessly to the aircraft systems 144 and/or the engine control system 136 to transmit signals and/or data to the aircraft systems 144 and/or the engine control system 136.

It should be understood that the aircraft 130 merely represents one illustrative embodiment that may be configured to implement embodiments or portions of embodiments of the devices, systems, and methods described herein. During operation, the aircraft 130 (such as the engine control system 136 and/or another component) may diagnose or predict a system fault in one or more of the various aircraft systems 144. By way of non-limiting example, while the aircraft 130 is being operated, the control mechanism 160 may be utilized to operate one or more of the aircraft systems 144. Various sensors, including, but not limited to, the fan speed sensors 152, the temperature sensors 154, and/or the pressure sensors 156 may output data relevant to various characteristics of the engine 140 and/or the other aircraft systems 144. The engine control system 136 may utilize inputs from the control mechanism 160, the fan speed sensors 152, the temperature sensors 154, the pressure sensors 156, the various aircraft systems 144, one or more database, and/or information from airline control, flight operations, or the like to diagnose, detect, and/or predict faults that airline maintenance crew may be unaware of. Among other things, the engine control system 136 may analyze the data output by the various sensors (e.g., the fan speed sensors 152, the temperature sensors 154, the pressure sensors 156, etc.), over a period of time to determine drifts, trends, steps, or spikes in the operation of the engines 140 and/or the various other aircraft systems 144. The engine control system 136 may also analyze the system data to determine historic pressures, historic temperatures, pressure differences between the plurality of engines 140 on the aircraft 130, temperature differences between the plurality of engines 140 on the aircraft 130, and/or the like, and to diagnose, detect, and/or predict faults in the engines 140 and/or the various other aircraft systems 144 based thereon. Once a fault has been diagnosed, detected, and/or predicted, an indication may be provided on the aircraft 130 and/or at the ground system 120. It is contemplated that the diagnosis, detection, and/or prediction of faults may be completed during pre-flight checks, may be completed during flight, may be completed post flight, or may be completed after a plurality of flights has occurred. The aircraft wireless communications link 166 and the ground wireless communications link 122 may transmit data such that data and/or information pertaining to the fault may be transmitted off the aircraft 130.

While the embodiment of FIG. 1 specifically relates to components within an aircraft 130, the present disclosure is not limited to such. That is, the various components depicted with respect to the aircraft 130 may be incorporated within various other types of craft and may function in a similar manner to deliver and install new software and/or updated software to the engine control system 136 as described herein. For example, the various components described herein with respect to the aircraft 130 may be present in watercraft, spacecraft, and/or the like without departing from the scope of the present disclosure.

Still referring to FIG. 1, the ground system 120 is generally a transmission system located on the ground that is capable of transmitting and/or receiving signals to/from the aircraft 130. That is, the ground system 120 may include a ground wireless communications link 122 that is communicatively coupled to the aircraft wireless communications link 166 wirelessly to transmit and/or receive signals and/or data. In some embodiments, the ground system 120 may be an air traffic control (ATC) tower and/or one or more components or systems thereof. Accordingly, the ground wireless communications link 122 may be a VHF communication system, an ACARS unit, a CPDLC system, FANS, and/or the like. Using the ground system 120 and the ground wireless communications link 122, the various non-aircraft components depicted in the embodiment of FIG. 1 may be communicatively coupled to the aircraft 130, even in instances where the aircraft 130 is airborne and in flight, thereby allowing for on-demand transmission of software and/or software updates whenever such software and/or software updates may be needed. However, it should be understood that the embodiment depicted in FIG. 1 is merely illustrative. In other embodiments, the aircraft 130 may be communicatively coupled to the various other components of the software delivery system 100 when on the ground and physically coupled to one of the components of the software delivery system 100, such as, for example, the ground support equipment 170.

The ground support equipment (GSE) 170 is an equipment external equipment used to support and test the engine control system 136 and/or other components of the aircraft 102. The ground support equipment 170 is configured to provide software updates to the engine control system 136 and download data obtained by the engine control system 136 during a flight. As another non-limiting example, the GSE 170 may include production support equipment for restricted data monitoring, test support equipment for comprehensive data monitoring and changing adjustable parameters, and integration test rigs for system and software testing. In embodiments, the GSE 170 may be connected to the engine control system 136 via wired local area network, or Ethernet. The GSE 170 may communicate with the engine control system 136 according to Ethernet protocols. The GSE 170 may be a portable maintenance access terminal.

FIG. 2 depicts functional block diagrams including the engine control system 136 and the GSE 170, according to one or more embodiments shown and described herein. The engine control system 136 includes the control unit 200, as well as a distributed module 240 and a second distributed module 250. Each of the distributed module 240 and the second distributed module 250 is configured to control various aspects of performance of the engines 140. While the illustrated embodiment depicts two distributed modules 240 and 250, it should be understood that any number of distributed modules may be included within the engine control system 136 in other embodiments. The engine control system 136 may utilize inputs from the fan speed sensors 152, the temperature sensors 154, the pressure sensors 156, or the like to diagnose, detect, and/or predict faults. As non-limiting examples, the engine control system 136 may analyze the data output by engine sensors (e.g., the fan speed sensors 152, the temperature sensors 154, the pressure sensors 156, etc.), over a period of time to determine drifts, trends, steps, or spikes in the operation of the engines 140.

The GSE 170 may include one or more processing devices 172, a non-transitory memory component 174, and device interface hardware 176. A local interface 178, such as a bus or the like, may interconnect the various components.

The one or more processing devices 172, such as a computer processing unit (CPU), may be the central processing unit of the GSE 170, performing calculations and logic operations to execute a program. The one or more processing devices 172, alone or in conjunction with the other components, are illustrative processing devices, computing devices, processors, or combinations thereof. The one or more processing devices 172 may include any processing component configured to receive and execute instructions (such as from the memory component 174).

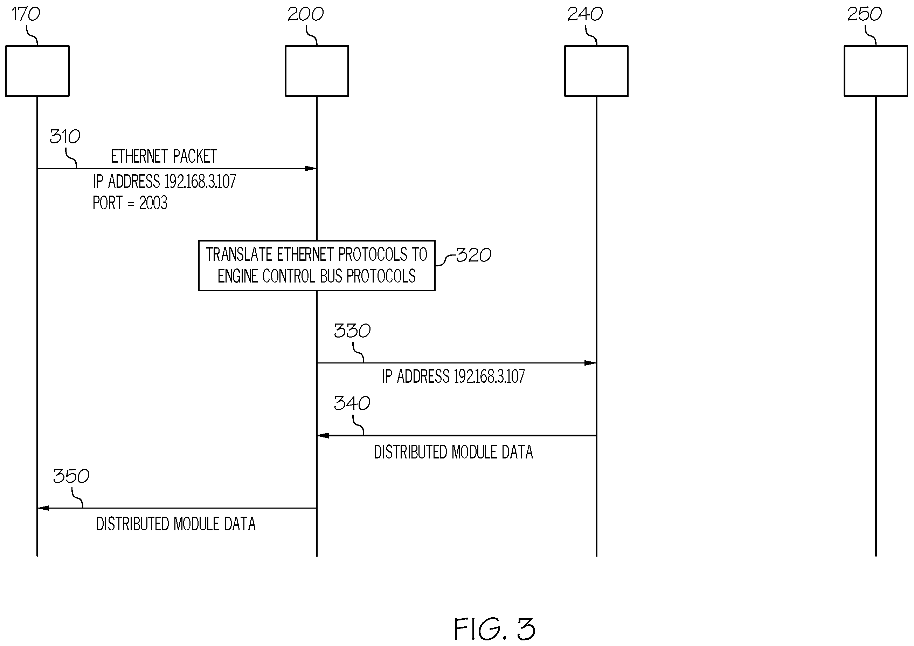

The memory component 174 may be configured as a volatile and/or a nonvolatile computer-readable medium and, as such, may include random access memory (including SRAM, DRAM, and/or other types of random access memory), read only memory (ROM), flash memory, registers, compact discs (CD), digital versatile discs (DVD), and/or other types of storage components. The memory component 174 may include one or more programming instructions thereon that, when executed by the one or more processing devices 172, cause the one or more processing devices 172 to complete various processes, such as generating various commands and/or messages and transmitting them to the control unit 200 described herein with respect to FIGS. 3-5.

The memory component 174 may include a memory loader configured to provide software updates to the engine control system 136 and download data obtained by the engine control system 136 during a flight. The memory loader may provide software updates according to ARINC 615A and ARINC 675 standards. ARINC 615A and ARINC 675 standards specify high speed Ethernet based data load operations. ARINC 615A and ARINC 675 standards define the protocol to be used for both airborne data loader (ADL) intended for installation in the aircraft, and for portable data loaders (PDL) intended to be used for line maintenance operations.

In embodiments, the device interface hardware 176 may be an Ethernet connector. The device interface hardware 176 may be connected to a device interface hardware 165 of the control unit 200 via an Ethernet connection 210, for example, a fiber optic Ethernet cable. The GSE 170 is external to the aircraft 130 and may be connected to the control unit 200 by the fiber optic Ethernet cable. The device interface hardware 176 may transmit and receive messages to and from the device interface hardware 165 based on Ethernet protocols.

The control unit 200 may include one or more processors 162, the non-transitory memory component 164, and device interface hardware 165. A local interface 167, such as a bus or the like, may interconnect the various components.

In embodiments, the device interface hardware 165 may be an Ethernet connector. The device interface hardware 165 may be connected to the device interface hardware 176 of the GSE 170 via the Ethernet connection 210, for example, a fiber optic Ethernet cable.

The non-transitory memory component 164 of the control unit 200 may store routing software that is configured to translate protocols of an Ethernet packet to protocols for a first engine control bus 220 or a second engine control bus 230. For example, the Ethernet protocols used for communication between the GSE 170 and the control unit 200 are different from protocols for first and second engine control busses 220 and 230. The routing software translates the Ethernet protocols to the protocols for one of the first and second engine control busses 220 and 230 for each of the messages received from the GSE 170 such that the messages may be forwarded to the first distributed module 240 or the second distributed module 250 using the first engine control bus 220 or the second engine control bus 230 according to the translated protocols. The first engine control bus 220 or the second engine control bus 230 may be a serial data bus, or an Engine Area Distributed Interconnect Network (EADIN) bus.

The control unit 200 may communicate with the first distributed module 240 via the first engine control bus 220, and communicate with the second distributed module 250 via the second engine control bus 230. In some embodiments, the control unit 200 may communicate with both the first distributed module 240 and the second distributed module 250 via a single engine control bus instead of two separate engine control buses. The first and second engine control buses 220 and 230 use different protocols from the protocols used in Ethernet communication between the GSE 170 and the control unit 200. Specifically, the first engine control bus 220 and the second engine control bus 230 may use RS-485 with EADIN protocol for operation. The EADIN is based on the automotive industry standard Local Interconnect Network bus (LINbus) communications bus. The EADIN improves the standard LINbus specification in the areas of data bus rate, physical layer robustness and data integrity.

In embodiments, the control unit 200, the first distributed module 240, and the second distributed module 250 have different dedicated IP addresses such that the GSE 170 recognizes the control unit 200, the first distributed module 240, and the second distributed module 250 as different devices. For example, the control unit 200 has a dedicated IP address of 192.168.3.106, the first distributed module 240 has a dedicated IP address of 192.168.3.107, and the second distributed module 250 has a dedicated IP address of 192.168.3.108.

The messages communicated between the GSE 170 and the control unit 200 may be transmitted using a plurality of ports. The plurality ports may include a continuous read/write port (for example, port 2001), a remaining interactive commands port (for example, port 2002), a data monitoring port (for example, port 2003), and a parameter simulation port (for example, port 2004). The continuous read/wire port is used for commands to read and write memory repeatedly. In addition, data from the first distributed module 240 or the second distributed module 250 may be continuously provided to the GSE 170 via the control unit 200. The remaining interactive commands port is used for single commands to read or write memory, make adjustments, or change access permission. The data monitoring port is used for continuous streaming of output data. For example, when the GSE 170 is connected to the control unit 200, data is generally continuously provided from the control unit 200. The parameter simulation port is used for transmitting parameter simulation messages. Parameter simulation messages may include parameters, such as a pressure, oil debris, a torque, and the like. The parameter simulation messages provide simulating inputs that cannot conveniently be generated during testing. For example, if conditions of a certain pressure, torque, oil debris, and the like need to be present in the engines 140 in order to test the engine system, the GSE 170 may provide the parameter simulation messages including the simulated inputs to the control unit 200. The control unit 200 may then forward the parameter simulation messages to the first distributed module 240 and/or the second distributed module 250 via the parameter simulation port.

While not illustrated in FIG. 2, it should be understood that the engine control system 136 may be in communication with other components of the aircraft 130. As non-limiting examples, the engine control system 136 may be communicatively coupled to an alternator, reverser solenoids and switches, engine condition monitoring signals, and/or the like in some embodiments.

FIG. 3 depicts communication among the GSE 170, the control unit 200, the first distributed module 240, and the second distributed module 250, according to one or more embodiments shown and described herein.

In step 310, the GSE 170 transmits a message to the control unit 200 via the Ethernet connection 210 according to Ethernet standards, for example, ARINC 615A and ARINC 675 standards. The message may be an Ethernet packet. The Ethernet packet may include a destination IP address in a Ethernet packet header. In this example, the destination IP address is 192.168.3.107, which corresponds to the IP address of the first distributed module 240. The message may include one or more messages among the continuous read/write message, the interactive commands message, the data monitoring message, and the parameter simulation message described above. In this example, the message includes a data monitoring message and the message is transmitted on the data monitoring port of 2003.

In step 320, the control unit 200 receives the message from the GSE 170 and translates Ethernet protocols for the message to protocols for the first engine control bus 220 (e.g., EADIN protocols). In embodiments, the routing software stored in the non-transitory memory component 164 translates the Ethernet protocols for the message to protocols for the first engine control bus 220. The control unit 200 may extract a destination IP address included in the message, and determine whether the control unit 200 needs to forward the message to one of the first and second distributed modules 240 and 250.

In step 330, the control unit 200 routes the message to the first distributed module 240 based on the extracted IP address and the translated protocols. In embodiments, the control unit 200 routes the message to the first distributed module 240 over the first engine control bus 220 according to the translated protocols. Because the routing software of the control unit 200 translates protocols for the message from the GSE 170 to protocols for appropriate digital data bus, the control unit 200 may communicate data between distributed modules on the engines 140 over any digital data bus.

In step 340, the first distributed module 240 may transmit distributed module data to the control unit 200. The distributed module data may include data from various sensors including a fan speed sensor 152, a temperature sensor 154, and a pressure sensor 156. In embodiments, the routing software in the control unit 200 may translate, with respect to the distributed module data, the protocols for the first engine control bus 220 to the Ethernet protocols. In step 350, the control unit 200 transmits the distributed module data to the GSE 170 according to the Ethernet protocols.

In the present disclosure, the control unit 200 communicates with the first distributed module 240 or the second distributed module 250 through the first engine control bus 220 or the second engine control bus 230 to operate in a peer-to-peer configuration. Both the control unit 200 and the first distributed module 240 or the second distributed module 250 require field reprogramming and data monitoring during production and test over Ethernet.

According to the present disclosure, only the control unit 200 has an Ethernet connection, and the first distributed module 240 and the second distributed module 250 do not have an Ethernet connection. In embodiments, a single device on the engines 140, i.e., the control unit 200 communicates with the GSE 170. The control unit 200 recognizes traffic destined for the first distributed module 240 or the second distributed module 250 based on an IP address included in a message and routes the message to the correct device over the first engine control bus 220 or the second engine control bus 230. In this regard, the present disclosure enables traffic separation for the control unit 200 and the first distributed module 240 or the second distributed module 250 using the same ports (e.g., the continuous read/write port, the remaining interactive commands port, the data monitoring port, and the parameter simulation port). Even though the first distributed module 240 and the second distributed module 250 do not have an Ethernet connection, reprogramming and data upload/download for the control unit 200 and the first distributed module 240 or the second distributed module 250 can be implemented according to the same standards (e.g., ARINC 615A and ARINC 675) because the routing software of the control unit 200 translates protocols from one format (e.g., Ethernet protocols) to another (e.g., protocols for an engine control bus). Thus, the present disclosure enables data monitoring of the control unit 200 and the first distributed module 240 or the second distributed module 250 by the GSE 170 using the same protocol.

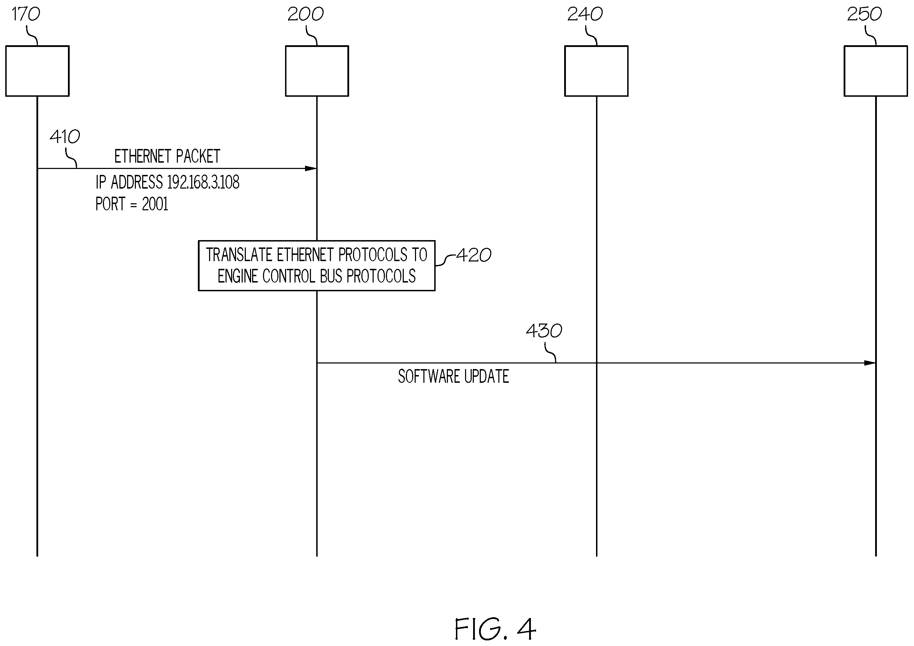

FIG. 4 depicts communication among the GSE 170, the control unit 200, the first distributed module 240, and the second distributed module 250, according to another embodiment shown and described herein.

In step 410, the GSE 170 transmits a message to the control unit 200 via the Ethernet connection 210 according to Ethernet standards, for example, ARINC 615A and ARINC 675 standards. The message may be an Ethernet packet. The Ethernet packet may include a destination IP address in an Ethernet packet header. In this example, the destination IP address is 192.168.3.108, which corresponds to the IP address of the second distributed module 250. The message may include one or more messages among the continuous read/write message, the interactive commands message, the data monitoring message, and the parameter simulation message described above. In this example, the message includes a continuous read/write message and the message is transmitted on the continuous read/write port of 2001.

In step 420, the control unit 200 receives the message from the GSE 170 and translates Ethernet protocols for the message to protocols for the second engine control bus 230 (e.g., EADIN protocols). In embodiments, the routing software stored in the non-transitory memory component 164 of the control unit 200 translates the Ethernet protocols for the message to protocols for the second engine control bus 230. The control unit 200 may extract a destination IP address included in the message, and determine whether the control unit 200 needs to forward the message to one of the first and second distributed modules 240 and 250.

In step 430, the control unit 200 routes the message to the second distributed module 250 based on the extracted IP address and the translated protocols. In embodiments, the control unit 200 routes the message to the second distributed module 250 over the second engine control bus 230 according to the translated protocols. The message may include software update, and the second distributed module 250 may receive and install the software update included in the message.

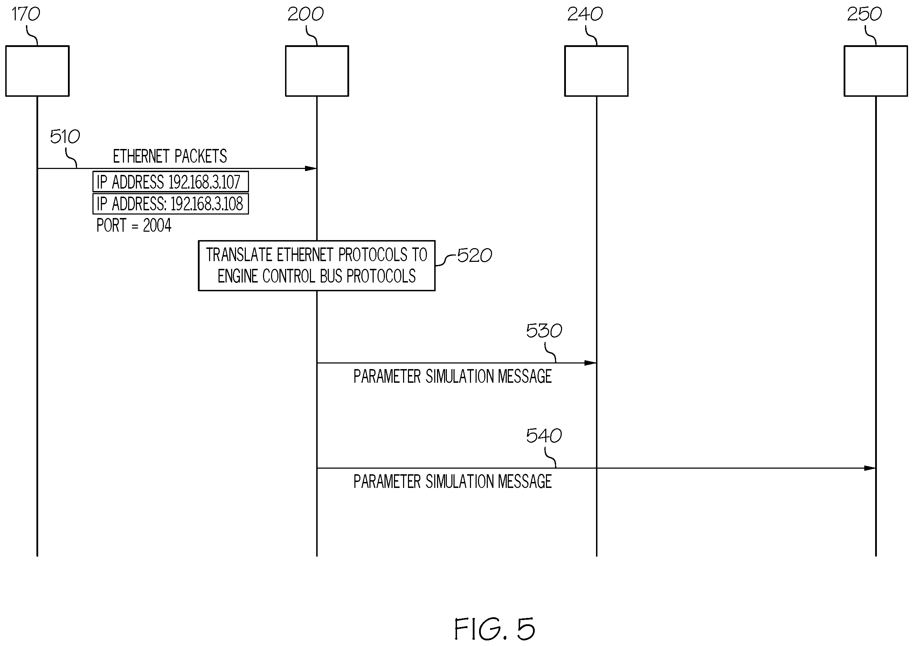

FIG. 5 depicts communication among the GSE 170, the control unit 200, the first distributed module 240, and the second distributed module 250, according to another embodiment shown and described herein.

In step 510, the GSE 170 transmits messages to the control unit 200 via the Ethernet connection 210 according to Ethernet standards, for example, ARINC 615A and ARINC 675 standards. The messages may be Ethernet packets. Each of the Ethernet packets may include a destination IP address. In this example, one of the Ethernet packets has a destination IP address of 192.168.3.107, which corresponds to the IP address of the first distributed module 240. The other one of the Ethernet packets has a destination IP address of 192.168.3.108, which corresponds to the IP address of the second distributed module 250. The messages may include one or more messages among the continuous read/write message, the interactive commands message, the data monitoring message, and the parameter simulation message described above. In this example, each of the messages includes a parameter simulation message and the message is transmitted on the parameter simulation port of 2004.

In step 520, the control unit 200 receives the messages from the GSE 170 and translates Ethernet protocols for the messages to protocols for engine control buses (e.g., EADIN protocols). In embodiments, the routing software stored in the non-transitory memory component 164 translates the Ethernet protocols for one message to protocols for the first engine control bus 220 and translates the Ethernet protocols for the other message to protocols for the second engine control bus 230. The control unit 200 may extract a destination IP address included in each of the messages, and determine whether the control unit 200 needs to forward the message to one of the first and second distributed modules 240 and 250.

In step 530, the control unit 200 routes a parameter simulation message to the first distributed module 240 based on the extracted IP address and the translated protocols. In embodiments, the control unit 200 routes the parameter simulation message to the first distributed module 240 over the first engine control bus 220 according to the translated protocols. The parameter simulation message may include parameters such as a pressure, oil debris, a torque, and the like. The first distributed module 240 may implement a simulation test based on the parameters included in the parameter simulation message.

In step 540, the control unit 200 routes the other parameter simulation message to the second distributed module 250 based on the extracted IP address and the translated protocols. In embodiments, the control unit 200 routes the parameter simulation message to the second distributed module 250 over the second engine control bus 230 according to the translated protocols. The parameter simulation message may include parameters such as a pressure, oil debris, a torque, and the like. The second distributed module 250 may implement a simulation test based on the parameters included in the parameter simulation message.

It should now be understood that that devices, systems, and methods described herein utilize routing software in the control unit and existing engine control busses to route messages from a ground support equipment to distributed control modules. The control unit is configured to receive data from the equipment via an Ethernet connection, translate Ethernet protocols of the data to protocols for the engine control bus, identify an IP address in the data, and route the data to one of the one or more distributed modules based on the IP address and the translated protocols. In this regards, the present disclosure enables traffic separation for the control unit and the distributed module using the same ports (e.g., the continuous read/write port, the remaining interactive commands port, the data monitoring port, and the parameter simulation port). Even though the first distributed module and the second distributed module do not have an Ethernet connection, reprogramming and data upload/download for the control unit and the DMC can be implemented according to the same standards (e.g., ARINC 615A and ARINC 675) because the routing software of the control unit translates protocols from one format (e.g., Ethernet protocols) to another (e.g., protocols for an engine control bus). Thus, the present disclosure enables data monitoring of the control unit and the distributed module by the GSE 170 using the same protocol.

## Claims

1. A data routing system comprising an aircraft (100) with an engine, wherein the aircraft (100) comprises:
a control unit (200); and
one or more distributed modules (240, 250);
wherein the control unit (200) and the one or more distributed modules (240, 250) each has a respective dedicated Internet Protocol (IP) address;
wherein the data routing system further comprises a ground support equipment, GSE, (170) external to the aircraft and configured to communicatively couple to the control unit (200);
wherein the control unit (200) has an Ethernet connection with the GSE (170) and the one or more distributed modules (240, 250) do not have Ethernet connections with the GSE (170);
wherein the control unit (200) is configured to communicate with each of the one or more distributed modules (240, 250) via a control bus (220, 230);
wherein the control unit (200) is configured to:
receive an Ethernet packet comprising data from the GSE (170) via the Ethernet connection;
identify an IP address included in the Ethernet packet, to identify which of the one or more distributed modules (240, 250) is the intended destination for the data;
translate protocols of the Ethernet packet to protocols for the control bus (220, 230); and
route the data of the Ethernet packet to the identified one of the one or more distributed modules (240, 250) over the control bus (220, 230);
and wherein the GSE (170) comprises a data loader configured to upload software to the control unit and download data from the control unit.

2. The data routing system of any claim 1, wherein the GSE (170) is configured to transmit the data to the control unit (200) according to a data bus standard.

3. The data routing system of claim 1 or claim 2, wherein the one or more distributed modules (240, 250) include a first distributed module (240) and a second distributed module (250).

4. The data routing system of any one of the preceding claims, wherein the one or more distributed modules (240, 250) include a first distributed module (240) on the engine of the aircraft, and a second distributed module (250) on another engine of the aircraft.

5. The data routing system of any one of the preceding claims, wherein the data includes at least one of a read or write message, an interactive command message, a FADEC monitoring bus message, and a parameter simulation message, and
the read or write message, the interactive command message, the FADEC monitoring bus message, and the parameter simulation message are assigned to different ports.

6. The data routing system of any one of the preceding claims, wherein the one or more distributed modules (240, 250) includes at least one of a pressure sub-system configured to read pressure sensors, an engine monitoring unit for prognostics and health monitoring, and smart sensors and actuators.

7. The data routing system of any one of the preceding claims, wherein the GSE (170) is a portable maintenance access terminal.

8. The data routing system of any one of claims 1 to 7, wherein the GSE (170) further comprises at least one of a production support equipment configured to restrict data monitoring, a test support equipment configured to monitor data from the control unit and change adjustable parameters, and an integration test rig configured to test system and software.

9. A control unit (200) for an aircraft, the control unit (200) comprising:
one or more processors (162);
one or more databases; and
one or more non-transitory memory modules (164) communicatively coupled to the one or more processors (162) and storing machine-readable instructions that, when executed, cause the one or more processors to perform the following:
receive an Ethernet packet comprising data from a ground support equipment, GSE, (170) external to the aircraft, via an Ethernet connection; translate protocols of the Ethernet packet to protocols for a control bus (220, 230), the control bus (220, 230) being established between the control unit (200) and one or more distributed modules (240, 250) within the aircraft;
extract an IP address from the Ethernet packet to identify which of the one or more distributed modules (240, 250) is the intended destination for the data; and
route data of the Ethernet packet to the identified one of the one or more distributed modules over the control bus (220, 230);
wherein the control unit (200) and the one or more distributed modules (240, 250) each has a respective dedicated Internet Protocol (IP) address;
wherein the control unit (200) has an Ethernet connection with the GSE (170) and the one or more distributed modules (240, 250) do not have Ethernet connections with the GSE (170);
and wherein the GSE (170) comprises a data loader configured to upload software to the control unit and download data from the control unit.

10. The control unit (200) of claim 9, wherein the one or more distributed modules (240, 250) include a first distributed module (240) on an engine of the aircraft, and a second distributed module (250) on another engine of the aircraft.

11. A method for routing data for an aircraft having an engine, the aircraft further including a control unit (200) and one or more distributed modules (240, 250);
wherein the control unit (200) and the one or more distributed modules (240, 250) each has a respective dedicated Internet Protocol (IP) address;
wherein the control unit (200) has an Ethernet connection with a ground support equipment, GSE, (170), external to the aircraft, and the one or more distributed modules (240, 250) do not have Ethernet connections with the GSE (170);
and wherein the GSE (170) comprises a data loader configured to upload software to the control unit and download data from the control unit; the method comprising the steps of:
receiving an Ethernet packet, comprising data, at the control unit (200) from the GSE (170), via an Ethernet connection;
extracting an IP address from the Ethernet packet received from the GSE (170) to identify which of the one or more distributed modules (240, 250) is the intended destination for the data;
translating protocols of the Ethernet packet to protocols for a control bus (220, 230), the control bus (220, 230) being established between the control unit (200) and the one or more distributed modules (240, 250); and
routing data of the Ethernet packet to the identified one of the one or more distributed modules over the control bus (220, 230).

## Patentansprüche

1. Datenroutingsystem, umfassend ein Luftfahrzeug (100) mit einem Triebwerk, wobei das Luftfahrzeug (100) umfasst:
eine Steuereinheit (200); und
ein oder mehrere verteilte Module (240, 250);
wobei die Steuereinheit (200) und das eine oder die mehreren verteilten Module (240, 250) jeweils eine jeweilige dedizierte Internetprotokolladresse (IP-Adresse) aufweisen;
wobei das Datenroutingsystem ferner eine Bodenunterstützungsanlage, GSE, (170) außerhalb des Luftfahrzeugs umfasst, und konfiguriert, um mit der Steuereinheit (200) kommunikativ zu koppeln;
wobei die Steuereinheit (200) eine Ethernet-Verbindung mit der GSE (170) aufweist und das eine oder die mehreren verteilten Module (240, 250) keine Ethernet-Verbindungen mit der GSE (170) aufweisen;
wobei die Steuereinheit (200) konfiguriert ist, um mit jedem des einen oder der mehreren verteilten Module (240, 250) über einen Steuerbus (220, 230) zu kommunizieren;
wobei die Steuereinheit (200) konfiguriert ist zum:
Empfangen eines Ethernet-Pakets, umfassend Daten von der GSE (170) über die Ethernet-Verbindung;
Identifizieren einer IP-Adresse, die in dem Ethernet-Paket eingeschlossen ist, um zu identifizieren, welches des einen oder der mehreren verteilten Module (240, 250) das beabsichtigte Ziel für die Daten ist;
Übersetzen von Protokollen des Ethernet-Pakets in Protokolle für den Steuerbus (220, 230); und
Routen der Daten des Ethernet-Pakets über den Steuerbus (220, 230) an das identifizierte eine des einen oder der mehreren verteilten Module (240, 250);
und wobei die GSE (170) einen Datenlader umfasst, der konfiguriert ist, um Software auf die Steuereinheit hochzuladen und Daten von der Steuereinheit herunterzuladen.

2. Datenroutingsystem nach Anspruch 1, wobei die GSE (170) konfiguriert ist, um die Daten gemäß einem Datenbusstandard an die Steuereinheit (200) zu übertragen.

3. Datenroutingsystem nach Anspruch 1 oder 2, wobei das eine oder die mehreren verteilten Module (240, 250) ein erstes verteiltes Modul (240) und ein zweites verteiltes Modul (250) einschließen.

4. Datenroutingsystem nach einem der vorstehenden Ansprüche, wobei das eine oder die mehreren verteilten Module (240, 250) ein erstes verteiltes Modul (240) an dem Triebwerk des Luftfahrzeugs und ein zweites verteiltes Modul (250) an einem anderen Triebwerk des Luftfahrzeugs einschließen.

5. Datenroutingsystem nach einem der vorstehenden Ansprüche, wobei die Daten mindestens eines von einer Lese- oder Schreibnachricht, einer interaktiven Befehlsnachricht, einer FADEC-Überwachungsbusnachricht und einer Parametersimulationsnachricht einschließen, und
die Lese- oder Schreibnachricht, die interaktive Befehlsnachricht, die FADEC-Überwachungsbusnachricht und die Parametersimulationsnachricht unterschiedlichen Ports zugewiesen sind.

6. Datenroutingsystem nach einem der vorstehenden Ansprüche, wobei das eine oder die mehreren verteilten Module (240, 250) mindestens eines einschließen von einem Drucksubsystem, das konfiguriert ist, um Drucksensoren zu lesen, einer Motorüberwachungseinheit für Prognosen und Gesundheitsüberwachung und intelligenten Sensoren und Aktoren.

7. Datenroutingsystem nach einem der vorstehenden Ansprüche, wobei die GSE (170) ein tragbares Wartungszugangsterminal ist.

8. Datenroutingsystem nach einem der Ansprüche 1 bis 7, wobei die GSE (170) ferner mindestens eines umfasst von einer Produktionsunterstützungsanlage, die konfiguriert ist, um Datenüberwachung einzuschränken, einer Testunterstützungsanlage, die konfiguriert ist, um Daten von der Steuereinheit zu überwachen und einstellbare Parameter zu ändern, und einem Integrationsprüfstand, der konfiguriert ist, um System und Software zu testen.

9. Steuereinheit (200) für ein Luftfahrzeug, die Steuereinheit (200) umfassend:
einen oder mehrere Prozessoren (162);
eine oder mehrere Datenbanken; und
ein oder mehrere nichtflüchtige Speichermodule (164), die mit dem einen oder den mehreren Prozessoren (162) kommunikativ gekoppelt sind und maschinenlesbare Anweisungen speichern, die, wenn sie ausgeführt werden, den einen oder die mehreren Prozessoren veranlassen, das Folgende durchzuführen:
Empfangen eines Ethernet-Pakets, umfassend Daten von einer Bodenunterstützungsanlage, GSE, (170) außerhalb des Luftfahrzeugs über eine Ethernet-Verbindung; Übersetzen von Protokollen des Ethernet-Pakets in Protokolle für einen Steuerbus (220, 230), wobei der Steuerbus (220, 230) zwischen der Steuereinheit (200) und einem oder mehreren verteilten Modulen (240, 250) innerhalb des Luftfahrzeugs aufgebaut ist;
Extrahieren einer IP-Adresse aus dem Ethernet-Paket, um zu identifizieren, welches des einen oder der mehreren verteilten Module (240, 250) das beabsichtigte Ziel für die Daten ist; und
Routen von Daten des Ethernet-Pakets über den Steuerbus (220, 230) an das identifizierte eine des einen oder der mehreren verteilten Module;
wobei die Steuereinheit (200) und das eine oder die mehreren verteilten Module (240, 250) jeweils eine jeweilige dedizierte Internetprotokolladresse (IP-Adresse) aufweisen;
wobei die Steuereinheit (200) eine Ethernet-Verbindung mit der GSE (170) aufweist und das eine oder die mehreren verteilten Module (240, 250) keine Ethernet-Verbindungen mit der GSE (170) aufweisen;
und wobei die GSE (170) einen Datenlader umfasst, der konfiguriert ist, um Software auf die Steuereinheit hochzuladen und Daten von der Steuereinheit herunterzuladen.

10. Steuereinheit (200) nach Anspruch 9, wobei das eine oder die mehreren verteilten Module (240, 250) ein erstes verteiltes Modul (240) an einem Triebwerk des Luftfahrzeugs und ein zweites verteiltes Modul (250) an einem anderen Triebwerk des Luftfahrzeugs einschließen.

11. Verfahren zum Routen von Daten für ein Luftfahrzeug, das ein Triebwerk aufweist, wobei das Luftfahrzeug ferner eine Steuereinheit (200) und ein oder mehrere verteilte Module (240, 250) einschließt;
wobei die Steuereinheit (200) und das eine oder die mehreren verteilten Module (240, 250) jeweils eine jeweilige dedizierte Internetprotokolladresse (IP-Adresse) aufweisen;
wobei die Steuereinheit (200) eine Ethernet-Verbindung mit einer Bodenunterstützungsanlage, GSE, (170) außerhalb des Luftfahrzeugs aufweist und das eine oder die mehreren verteilten Module (240, 250) keine Ethernet-Verbindungen mit der GSE (170) aufweisen;
und wobei die GSE (170) einen Datenlader umfasst, der konfiguriert ist, um Software auf die Steuereinheit hochzuladen und Daten von der Steuereinheit herunterzuladen; das Verfahren umfassend die Schritte
Empfangen eines Ethernet-Pakets, umfassend Daten, an der Steuereinheit (200) von der GSE (170) über eine Ethernet-Verbindung;
Extrahieren einer IP-Adresse aus dem Ethernet-Paket, das von dem GSE (170) empfangen wird, um zu identifizieren, welches des einen oder der mehreren verteilten Module (240, 250) das beabsichtigte Ziel für die Daten ist;
Übersetzen von Protokollen des Ethernet-Pakets in Protokolle für einen Steuerbus (220, 230), wobei der Steuerbus (220, 230) zwischen der Steuereinheit (200) und dem einen oder den mehreren verteilten Modulen (240, 250) aufgebaut ist; und
Routen von Daten des Ethernet-Pakets über den Steuerbus (220, 230) an das identifizierte eine des einen oder der mehreren verteilten Module.

## Revendications

1. Système d'acheminement de données comprenant un aéronef (100) avec un moteur, dans lequel l'aéronef (100) comprend :
une unité de commande (200) ; et
un ou plusieurs modules distribués (240, 250) ;
dans lequel l'unité de commande (200) et le ou les modules distribués (240, 250) ont chacun une adresse de protocole Internet (IP) dédiée respective ;
dans lequel le système d'acheminement de données comprend en outre un équipement de soutien au sol (170) extérieur à l'aéronef et configuré pour être couplé en communication à l'unité de commande (200) ;
dans lequel l'unité de commande (200) a une connexion Ethernet avec le GSE (170) et le ou les modules distribués (240, 250) n'ont pas de connexions Ethernet avec le GSE (170) ;
dans lequel l'unité de commande (200) est configurée pour communiquer avec chacun du ou des modules distribués (240, 250) par l'intermédiaire d'un bus de commande (220, 230) ;
dans lequel l'unité de commande (200) est configurée pour :
recevoir un paquet Ethernet comprenant des données provenant du GSE (170) par l'intermédiaire de la connexion Ethernet ;
identifier une adresse IP incluse dans le paquet Ethernet, afin d'identifier lequel du ou des modules distribués (240, 250) est la destination prévue pour les données ;
traduire des protocoles du paquet Ethernet en protocoles pour le bus de commande (220, 230) ; et
acheminer les données du paquet Ethernet vers le module identifié du ou des modules distribués (240, 250) sur le bus de commande (220, 230) ;
et dans lequel le GSE (170) comprend un chargeur de données configuré pour télécharger un logiciel sur l'unité de commande et télécharger des données à partir de l'unité de commande.

2. Système d'acheminement de données selon l'une quelconque revendication 1, dans lequel le GSE (170) est configuré pour transmettre les données à l'unité de commande (200) selon une norme de bus de données.

3. Système d'acheminement de données selon la revendication 1 ou la revendication 2, dans lequel le ou les modules distribués (240, 250) comportent un premier module distribué (240) et un second module distribué (250).

4. Système d'acheminement de données selon l'une quelconque des revendications précédentes, dans lequel le ou les modules distribués (240, 250) comportent un premier module distribué (240) sur le moteur de l'aéronef, et un second module distribué (250) sur un autre moteur de l'aéronef.

5. Système d'acheminement de données selon l'une quelconque des revendications précédentes, dans lequel les données comportent au moins l'un parmi un message de lecture ou d'écriture, un message d'ordre interactif, un message de bus de surveillance FADEC et un message de simulation de paramètre, et
le message de lecture ou d'écriture, le message d'ordre interactif, le message de bus de surveillance FADEC et le message de simulation de paramètre sont attribués à des ports différents.

6. Système d'acheminement de données selon l'une quelconque des revendications précédentes, dans lequel le ou les modules distribués (240, 250) comportent au moins l'un parmi un sous-système de pression configuré pour lire des capteurs de pression, une unité de surveillance de moteur pour le pronostic et la surveillance de l'état, et des capteurs et actionneurs intelligents.

7. Système d'acheminement de données selon l'une quelconque des revendications précédentes, dans lequel le GSE (170) est un terminal portable d'accès à la maintenance.

8. Système d'acheminement de données selon l'une quelconque des revendications 1 à 7, dans lequel le GSE (170) comprend en outre au moins l'un parmi un équipement de soutien à la production configuré pour limiter la surveillance des données, un équipement de soutien aux tests configuré pour surveiller des données provenant de l'unité de commande et modifier des paramètres réglables, et un banc d'essai d'intégration configuré pour tester le système et le logiciel.

9. Unité de commande (200) pour un aéronef, l'unité de commande (200) comprenant :
un ou plusieurs processeurs (162) ;
une ou plusieurs bases de données ; et
un ou plusieurs modules de mémoire non transitoires (164) couplés en communication au ou aux processeurs (162) et stockant des instructions lisibles par une machine qui, lorsqu'elles sont exécutées, amènent le ou les processeurs à réaliser ce qui suit :
recevoir un paquet Ethernet comprenant des données provenant d'un équipement de soutien au sol, GSE (170) extérieur à l'aéronef, par l'intermédiaire d'une connexion Ethernet ; traduire des protocoles du paquet Ethernet en protocoles pour un bus de commande (220, 230), le bus de commande (220, 230) étant établi entre l'unité de commande (200) et un ou plusieurs modules distribués (240, 250) à l'intérieur de l'aéronef ;
extraire une adresse IP du paquet Ethernet afin d'identifier lequel du ou des modules distribués (240, 250) est la destination prévue pour les données ; et
acheminer les données du paquet Ethernet vers le module identifié du ou des modules distribués sur le bus de commande (220, 230) ;
dans laquelle l'unité de commande (200) et le ou les modules distribués (240, 250) ont chacun une adresse de protocole Internet (IP) dédiée respective ;
dans laquelle l'unité de commande (200) a une connexion Ethernet avec le GSE (170) et le ou les modules distribués (240, 250) n'ont pas de connexions Ethernet avec le GSE (170) ;
et dans laquelle le GSE (170) comprend un chargeur de données configuré pour télécharger un logiciel sur l'unité de commande et télécharger des données à partir de l'unité de commande.

10. Unité de commande (200) selon la revendication 9, dans laquelle le ou les modules distribués (240, 250) comportent un premier module distribué (240) sur un moteur de l'aéronef, et un second module distribué (250) sur un autre moteur de l'aéronef.

11. Procédé d'acheminement de données pour un aéronef ayant un moteur, l'aéronef comportant en outre une unité de commande (200) et un ou plusieurs modules distribués (240, 250) ;
dans lequel l'unité de commande (200) et le ou les modules distribués (240, 250) ont chacun une adresse de protocole Internet (IP) dédiée respective ;
dans lequel l'unité de commande (200) a une connexion Ethernet avec un équipement de soutien au sol, GSE (170) extérieur à l'aéronef, et le ou les modules distribués (240, 250) ne disposent pas de connexions Ethernet avec le GSE (170) ;
et dans lequel le GSE (170) comprend un chargeur de données configuré pour télécharger un logiciel sur l'unité de commande et télécharger des données à partir de l'unité de commande ; le procédé comprenant les étapes consistant à
recevoir un paquet Ethernet, comprenant des données, au niveau de l'unité de commande (200), en provenance du GSE (170), par l'intermédiaire d'une connexion Ethernet ;
extraire une adresse IP du paquet Ethernet reçu en provenance du GSE (170) pour identifier lequel du ou des modules distribués (240, 250) est la destination prévue pour les données ;
traduire les protocoles du paquet Ethernet en protocoles pour un bus de commande (220, 230), le bus de commande (220, 230) étant établi entre l'unité de commande (200) et le ou les modules distribués (240, 250) ; et
acheminer les données du paquet Ethernet vers le module identifié du ou des modules distribués sur le bus de commande (220, 230).
